Europäisches Patentamt

European Patent Office

Office européen des brevets

(11) Veröffentlichungsnummer: **0 186 074 B1**

(19)

(12) **EUROPÄISCHE PATENTSCHRIFT**

(45) Veröffentlichungstag der Patentschrift: **06.05.92**

(51) Int. Cl.⁵: **B65G 67/60**, B65G 15/16

(21) Anmeldenummer: **85115952.5**

(22) Anmeldetag: **13.12.85**

(54) **Aufgabe und Förderung von Schüttgut in eine Steilförderkombination durch ein Zutrimmgerät.**

(30) Priorität: **27.12.84 DE 3447498**

(43) Veröffentlichungstag der Anmeldung:
**02.07.86 Patentblatt 86/27**

(45) Bekanntmachung des Hinweises auf die
Patenterteilung:
**06.05.92 Patentblatt 92/19**

(84) Benannte Vertragsstaaten:
**BE CH DE GB IT LI NL**

(56) Entgegenhaltungen:
**DE-B- 2 717 100**
**US-A- 4 382 502**

(73) Patentinhaber: **Hartmann Förderanlagen
GmbH
Kaiserleistrasse 43
W-6050 Offenbach/Main(DE)**

(72) Erfinder: **Richard, Hermann
Max-Planck-Strasse 14
W-6056 Heusenstamm(DE)**
Erfinder: **Unland, Hermann
Wilhelmstrasse 7
W-6238 Hofheim(DE)**
Erfinder: **Ostmann, Klaus
Morneweg 35
W-6100 Darmstadt(DE)**

(74) Vertreter: **Munderich, Paul, Dipl.-Ing.
Frankfurter Strasse 84
W-6466 Gründau-Rothenbergen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zur Aufgabe und Förderung von Schüttgut in eine aus einem Förderband und einem im Förderbereich gleichlaufend angetriebenen Deckband gebildeten Steilförderkombination mit einer Schüttgutüberleitung auf einen im wesentlichen horizontal gerichteten, jedoch um die Endlagerung in spitzem, abweichend von der Horizontalen nach oben oder nach unten sich öffnendem Winkel verstellbaren Ausleger, wobei dieser in eine auf der Pier angeordneten Schiffsentladungseinrichtung überführt, mit in festem Abstand zur Steilförderkombination angeordneten Zutrimmgerät im Aufnahmebereich der Steilförderkombination zur Erzeugung eines in Richtung der Tangente des Förderbandes aufsteigenden Fördergutstroms und mit einer die Längung oder Kürzung des Förderbandes durch die Auslegerverstellung berücksichtigenden Ausgleichsvorrichtung sowie mit Umlenk- und Stützrollen, die durch die umlaufenden Bänder antreibbar sind.

Eine Vorrichtung der eingangs genannten Art ist aus der US-A-4 382 502 bekannt. Nach dieser Vorrichtung wird das Schüttgut über ein Zutrimmgerät in die Öffnung zwischen zwei vertikal angeordneten Förderbändern eingegeben und ohne Umlagerung in den horizontalen Bereich eines verstellbaren Auslegers überführt. Zumindest die eine Steilförderkombination bildende vertikale Anordnung der Förderbänder ist durch ein Gehäuse nach außen hin luftdicht abgeschlossen. In diesem Gehäuse wird über einen Kompressor ein auf die Oberfläche der Förderbänder einwirkender Überdruck erzeugt, so daß das zwischen den Förderbändern eingeschlossene Fördergut zusammengepreßt und entgegengesetzt zur Schwerkraft nach oben gefördert wird.

Die bekannte Vorrichtung hat den Nachteil, daß neben der komplizierten Kapselung zur Aufrechterhaltung eines Überdrucks in der Steilförderkombination die Förderung von fein-dispersen Fördergütern nur mit einem relativ niedrigen Wirkungsgrad möglich ist. Da zudem die Randzonen der Förderbänder durch mechanische Hilfsmittel, wie z.B. Andrückrollen, zusammengepreßt werden müssen, ist hier mit einem erheblichen Verschleiß zu rechnen.

Aufgabe der vorliegenden Erfindung ist es, die beschriebenen Nachteile zu vermeiden und eine Vorrichtung hinsichtlich der Anordnung und Ausbildung der Deckband/Elevatorkombination, der Umlenk- und Stützrollen und des Zutrimmgeräts so auszubilden, daß auch fein-disperse Schüttgüter mit hohem Wirkungsgrad und im Verhältnis zum Stand der Technik verschleißarm unter Verwendung von üblichen mechanischen Mitteln gefördert werden können.

Diese Aufgabe wird durch die im Patentanspruch 1 angegebenen Merkmale gelöst.

Die Verwendung eines Zutrimmgerätes zur Lockerung und Aufnahme des Gutes und dessen Umlenkung in ein in Richtung der Tangente an die Randbegrenzung des aufsteigenden Trums des Elevatorbandes führenden Gutstromes bildet in Verbindung mit dem Öffnungswinkel zwischen Elevatorband und Deckband eine nahezu optimale Voraussetzung für die Aufnahme des in disperser Verteilung aufsteigenden Schüttgutes mit hohem Wirkungsgrad, wobei das nicht erfaßte Gut zum Zutrimmgerät zurückfällt und um sofort wieder erneut in umgekehrter Richtung, d.h. in den Öffnungswinkel, hineingefördert zu werden.

Durch diese Einleitung des Senkrechts-Fördervorganges, der den überwiegenden Anteil der Reibungskräfte in das Zutrimmgerät verlegt, ist die weitere Förderung in der Steilförderkombination als nahezu verschleißfrei zu bezeichnen. Das Zutrimmgerät ist dabei in aller Regel separat auswechselbar. Die Fördergeschwindigkeit ist bei einer beispielsweisen Ausführung im verteilten Gutstrom mit etwa 2,5 m/sec. und in der Steilförderkombination mit etwa 2 m/sec. als relativ schnell zu bezeichnen, wobei selbstverständlich die Eigenschaften des zu fördernden Stoffes und dessen Granulometrie wichtige Parameter bei Einstellung der Förderleistung sind.

Das im Umlenkbereich zum Ausleger durch dessen geradlinige Weiterführung abhebende Abdeckband ist, abgesehen von seinem im Aufnahmebereich den Öffnungswinkel definierenden, vom Elevatorband abgerichteten Verlauf, als Einfachband zu bezeichnen, das durch die mögliche Ablenkung des als Ausleger wirksamen Elevatorbandes in seiner Führung nicht beeinträchtigt wird.

Die Umlenkung in den Auslegerbereich vereinfacht sich damit wesentlich und, da das Elevatorband selbst die Weiterförderung übernimmt, entfallen die in diesem Bereich sonst üblichen, Staub entwickelnden Übergabestellen von einem auf das andere Band.

Die in festem Achsabstand zueinander stehenden Umlenk- und Stützrollen im Aufnahmebereich einerseits und im Umlenkbereich andererseits erhöhen die Sicherheit und die Qualität der Bandführung.

Zum Fördervorgang innerhalb des Zutrimmgerätes ist zu bemerken, daß die Aufgabe des Gutes in den spitzen Öffnungswinkel durch gegenläufig angetriebene Schleuderräder, die Bestandteil des Zutrimmgerätes sind, in Verbindung mit der einstellbaren Umfangsgeschwindigkeit, Richtung und Geschwindigkeit des aufsteigenden Gutstromes bestimmen.

Unabhängig davon ist festzuhalten, daß die vorgeschlagenen Schleuderräder lockernd bzw. fräswirksam ausgebildet sind und entsprechend der gegebenen Beanspruchung eine sorgfältige Materialauswahl voraussetzen.

Es kann weiter vorgesehen werden, daß die Aufgabe des Gutes in den spitzen Öffnungswinkel über ein oder mehrere, zum Zutrimmgerät transportierende Querförderer erfolgt.

Dieser Vorschlag eignet sich insbesondere bei gegebener Notwendigkeit des Abtrages des Gutes in dünneren Schichten, um unterhalb des Zutrimmgerätes eine der Leistung der Anlage entsprechende Materialvorlage einzubringen.

Bei Vorliegen eines verhärteten Schüttgutes kann vorgesehen werden, daß die Aufgabe des Gutes in den spitzen Öffnungswinkel über ein Zutrimmgerät durch eine oder mehrere, im wesentlichen vertikal zugeordnete Schneckenfräsen unterstützt wird.

Als Elevatorband eignen sich neben den mit Bechern ausgerüsteten Bändern auch Kastenbänder, die in der Regel aus einem Elastomer hergestellt sind.

Zur Ausbildung des Umlenkbereiches wird vorgeschlagen, daß im Umlenkbereich ein über den Schöpfrand des Elevatorbandes greifendes, in Richtung des Bandlaufes elastisches und in Querrichtung hierzu starres Formstück das Elevatorband abdichtend absperrt und daß bei Änderung der Neigung des Auslegers ein mit der Abdeckung des über den Ausleger führenden Obertrums des Elevatorbandes zum Formstück korrespondierendes und mit der Abdeckung verbundenes Gleitstück, dieses überlappend, abdeckt.

Obwohl das Gut im Umlenkbereich nicht geworfen wird, sondern im Grunde genommen in abgegrenzten Behältnissen in Ruhelage über die Umlenkrolle in den Ausleger geführt wird, ist fallweise, beispielsweise durch bewegte Luft, besonders bei sehr leichtem Gut, eine Staubentwicklung denkbar, die durch die vorgesehene Maßnahme unterbunden werden kann.

Es kann auch, insbesondere bei klebendem Gut, zweckmäßig sein, daß das Formstück in eine partielle Abdeckung der Rücklaufumlenkrolle für das Abdeckband überführt.

Die vorgeschlagene Lösung wird damit in vollem Umfang der Aufgabenstellung gerecht.

Die erfindungsgemäße Vorrichtung zur Aufgabe und Förderung von Schüttgut wird durch die beigefügten schematischen Darstellungen einer beispielsweisen Ausführungsform näher erläutert.

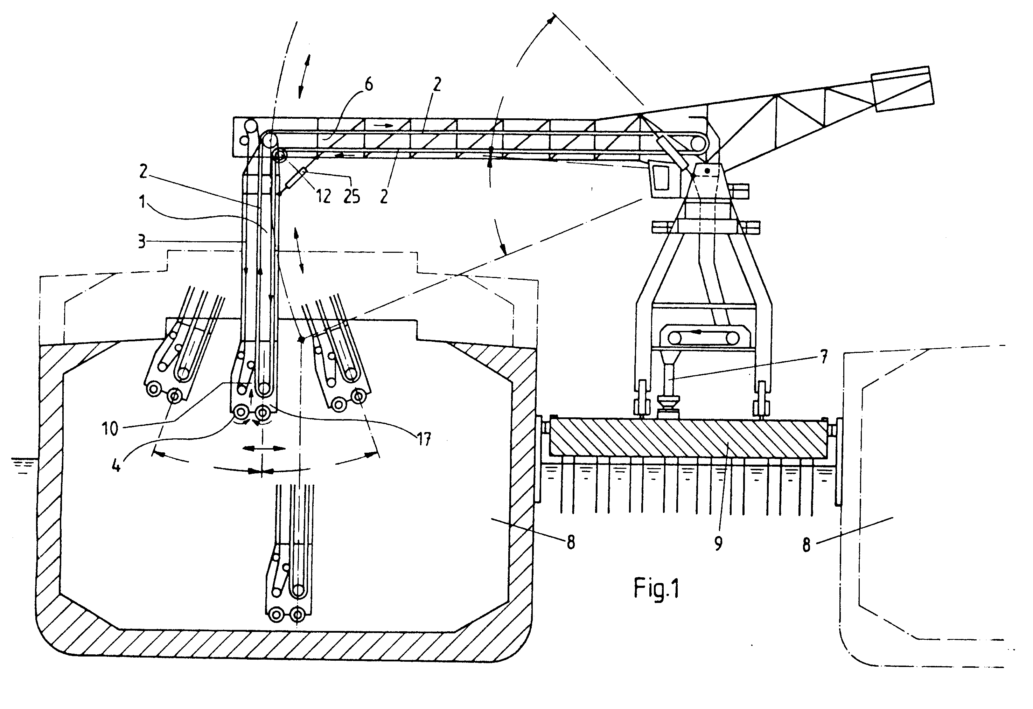

Figur 1 zeigt eine durch Steilförderer und Ausleger beschickte Schiffsentladeeinrichtung.

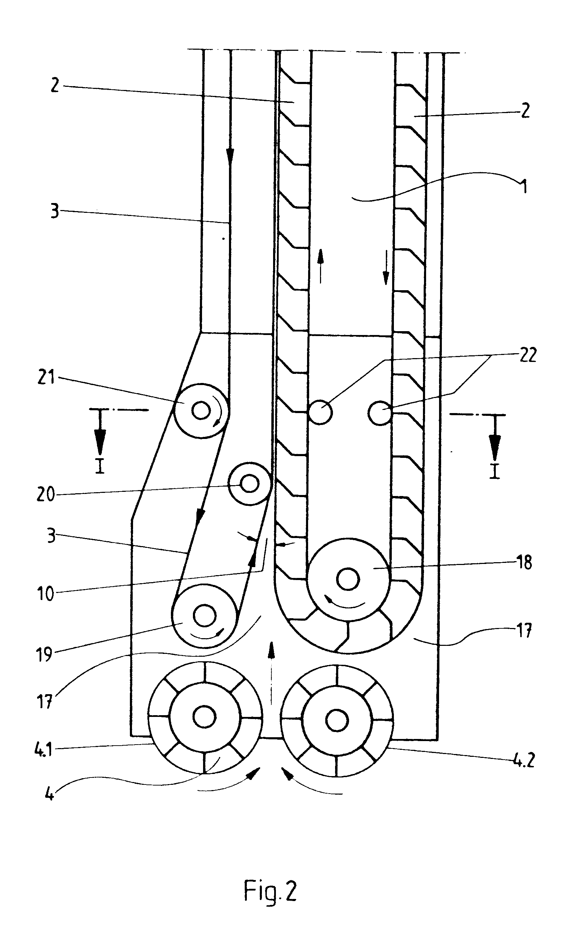

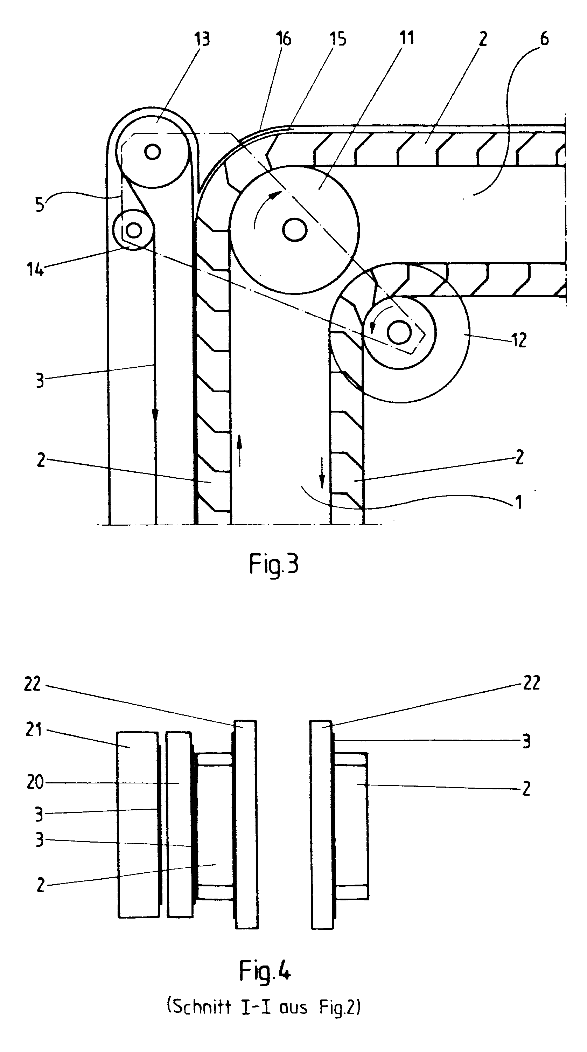

Figur 2 zeigt das in den Entladeraum eintauchende, aufnehmende Ende des Steilförderers mit zugeordnetem Zutrimmgerät.

Figur 3 zeigt den Umlenkbereich des Steilförderers in den Ausleger.

Figur 4 zeigt den Schnitt I-I durch Figur 2.

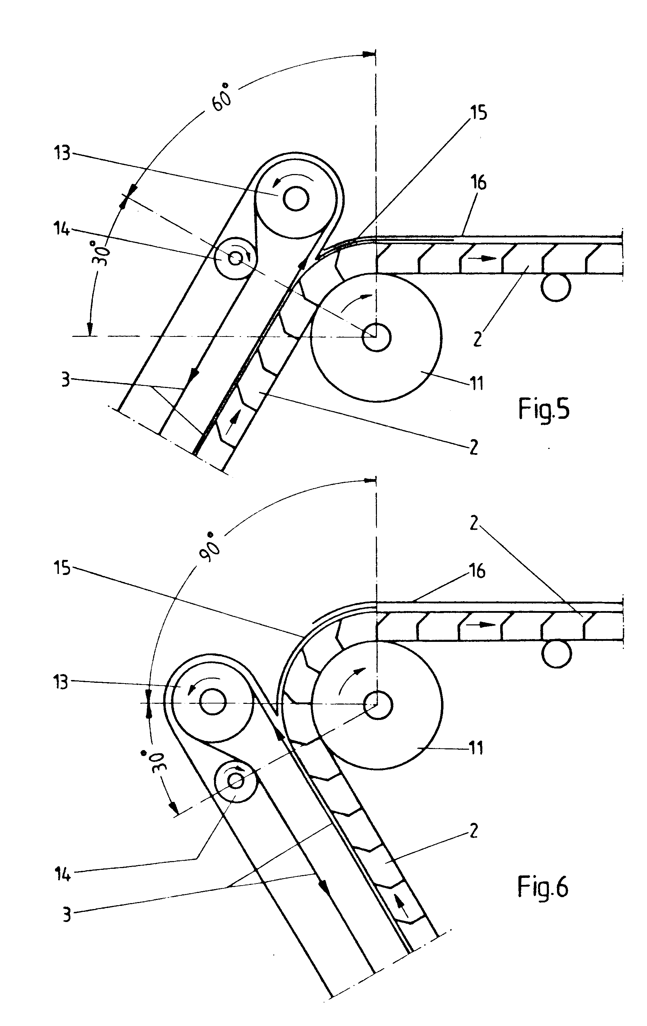

Figur 5 zeigt die Lage der Steilförderkombination in einer 60°-Abwinklung zur Senkrechten bei horizontaler Anordnung des Auslegers.

Figur 6 zeigt die Lage der Steilförderkombination bei einer 90°-Abwinklung zur Senkrechten bei horizontaler Lage des Auslegers.

Die in den Laderaum des Schiffes 8 eintauchende Steilförderkombination 1 besteht aus einem im Uhrzeigersinn angetriebenen Elevatorband 2 und einem entgegengesetzt angetriebenen Deckband 3. Das Deckband 3 hebt im Aufnahmebereich 17 der Steilförderkombination 1 um die Ablenkrolle 20 in einem spitzen, im weiteren durch die Deckbandumlenkrolle 19 bestimmten Öffnungswinkel 10 von der gutschöpfenden Randbegrenzung des aufsteigenden Trums des Elevatorbandes 2 ab, wobei der Öffnungswinkel 10 in der Regel 10° - 20° beträgt.

Der Steilförderkombination 1 ist etwa senkrecht zur Tangente an die gutschöpfende Randbegrenzung des Elevatorbandes 2 ein einen dispersen, aufwärtssteigenden Gutstrom erzeugendes Zutrimmgerät 4 zugeordnet, wobei der Gutstrom in den Öffnungswinkel 10 hineingefördert wird. Das Schüttgut wird von den sich schließenden Bändern 2/3 zur Weiterförderung erfaßt.

Im Umlenkbereich 5 wird das Obertrum des Elevatorbandes 2 in den in der Regel horizontal verlaufenden Ausleger 6, über eine Umlenkrolle 11, bis zur Gutabgabe in die Schiffsentladeeinrichtung 7 geleitet, während das rücklaufende Trum im Umlenkbereich 5 über die Rücklaufumlenkrolle 12 und die im Aufnahmebereich 17 angeordnete Einzugs-Umlenkrolle 18 zur erneuten Gutaufnahme geführt wird.

Die Umlenkung des rücklaufenden Deckbandes 3 im Umlenkbereich 5 geschieht über die Rücklaufumlenkvolle 13 zu der unteren, im Aufnahmebereich 17 angeordneten Deckbandumlenkrolle 19. Die weitere Führung des Deckbandes 3 ist durch die als Andrückrollen wirksamen Stützrollen 14 und 21 gegeben.

Die Verschwenkung der Steilförderkombination 1 ist insgesamt um die obere Elevatorband-Umlenkrolle 11 möglich, wobei die erforderlichen Lagerungen für die Rollen 11 bis 14 in diesem Bereich in fester Zuordnung zueinander stehen.

Dies gilt auch für die Rollen 18 bis 22 des Aufnahmebereiches 17.

Die Verschwenkung erfolgt durch ein zwischen Steilförderkombination 1 und Ausleger 6 angeordnetes, durch Druckmittel beaufschlagtes Hubzylindersystem 25.

Die mit der Winkeländerung verbundene Längung oder Kürzung des Elevatorbandweges wird durch eine nicht gezeichnete, beliebige Ausgleichsvorrichtung, z.B. durch eine selbstspannende Rolle, aufgenommen.

Die Steilförderkombination 1 und der in der Regel aus statischen Gründen in einem Gitterträger angeordnete Ausleger 6 sind weitgehend staubdicht gekapselt, wobei die Verkleidung des Elevatorbandes 2 im Ausleger 6 sich auf das Bandobertrum beschränken kann.

Im Umlenkbereich 5 wird das Obertrum des Elevatorbandes 2 durch ein in Längsrichtung elastisches und in Querrichtung steifes Formstück 15 aus Elastomer abgedeckt. Durch ein übergreifendes Gleitstück 16, das sich an der Verkleidung des Elevatorbandes 2 abstützt, wird bei Veränderung des Schwenkwinkels zwischen der Steilförderkombination 1 und dem Ausleger 6 die dadurch bedingten Abstandsänderungen überbrückt.

## Patentansprüche

1. Vorrichtung zur Aufgabe und Förderung von Schüttgut in eine aus einem Förderband (2) und einem im Förderbereich gleichlaufend angetriebenen Deckband (3) gebildeten Steilförderkombination (1) mit einer Schüttgutüberleitung auf einen im wesentlichen horizontal gerichteten, jedoch um die Endlagerung in spitzem, abweichend von der Horizontalen nach oben oder nach unten sich öffnendem Winkel (10) verstellbaren Ausleger (6), wobei dieser in eine auf der Pier angeordneten Schiffsentladungseinrichtung (7) überführt, mit in festem Abstand zur Steilförderkombination (1) angeordneten Zutrimmgerät (4) im Aufnahmebereich der Steilförderkombination (1) zur Erzeugung eines in Richtung der Tangente des Förderbandes (2) aufsteigenden Fördergutstroms und mit einer die Längung oder Kürzung des Förderbandes (2) durch die Auslegerverstellung berücksichtigenden Ausgleichsvorrichtung sowie mit Umlenk- und Stützrollen, die durch die umlaufenden Bänder (2/3) antreibbar sind, dadurch gekennzeichnet,

   daß das Deckband (3) der Steilförderkombination (1) in ihrem Eintrittsbereich (17) mit dem Elevatorband (2) einen spitzen Öffnungswinkel (10) einschließt,

   daß das Elevatorband (2) mit Förderkammern versehen ist und

daß das Lasttrum des Deckbandes (3) vor der oberen Umlenkung des Elevatorbandes (2) von diesem abhebt und wieder zu seiner unteren, gemeinsam mit einer Ablenkrolle (20) den Öffnungswinkel (10) der Steilförderkombination (1) definierenden Deckbandumlenkrolle (19) im Eintrittsbereich (17) zurückgeführt ist.

2. Vorrichtung nach Anspruch 1, gekennzeichnet durch gegenläufig angetriebene Schleuderräder (4.1 und 4.2), die Bestandteil des Zutrimmgerätes (4) sind, für die Aufgabe des Fördergutes in den spitzen Öffnungswinkel (10), wobei die Umfangsgeschwindigkeit der Schleuderräder (4.1 und 4.2) einstellbar ist.

3. Vorrichtung nach Anspruch 2, gekennzeichnet durch ein- oder mehrere zum Zutrimmgerät (4) transportierend angeordnete Querförderer.

4. Vorrichtung nach Anspruch 1, dadurch gekennzeichnet,

   daß dem Zutrimmgerät (4) eine oder mehrere, im wesentlichen vertikal angeordnete Schneckenfräsen zugeordnet ist bzw. sind.

5. Vorrichtung nach Anspruch 1, dadurch gekennzeichnet,

   daß das Elevatorband (2) ein Kastenband ist.

6. Vorrichtung nach Anspruch 1, dadurch gekennzeichnet,

   daß im oberen Umlenkbereich (5) das Elevatorband (2) durch ein über den Schöpfrand des Elevatorbandes (2) greifendes, in Richtung des Bandlaufs elastisches und in Querrichtung hierzu starres Formstück (15) abdichtend geschlossen ist, und

   daß für die Änderung der Neigung des Auslegers (6) eine Abdeckung (16) des über den Ausleger (6) führendes Obertrums des Elevatorbandes (2) im Bereich des Formstückes (15) als korrespondierendes, überlappendes Gleitstück ausgebildet ist.

7. Vorrichtung nach Anspruch 6, dadurch gekennzeichnet,

   daß das Formstück (15) an einer partiellen Abdeckung der Rücklaufumlenkrolle (13) für das Deckband (3) sitzt.

## Claims

1. Equipment for delivering and transporting bulk material, consisting of a conveyor belt (2) and in the conveyor area a parallel running powered shrouding (3); this combination forming a vertical conveyor system(1) with bulk material transfer to an essentially horizontal boom (6), the end pivot permitting a deflection of the boom above or below the horizontal position; the boom feeds a ship's unloading system (7) situated on a pier: at a fixed distance from this combined conveyor system is a feeder (4) in the reception area of the conveyor system (1), the feeder creates bulk material flow in the direction of the tangent of the conveyor belt (2) and with an extension or shortening of the conveyor belt (2) through the boom setting compensating equipment as well as return and support rollers, which are driven by the moving belts (2,3), characterised by the shrouding (3) covers the conveyor system (1) in the entrance area (17) with the elevator belt (2) having an acute opening angle (10), the elevator belt being fitted with buckets and the cover of the shrouding (3) prior to reaching the upper roller of the conveyor belt is raised and returned to the lower, together with a deflection roller (20), the opening angle (10) of the combined conveyor system (1), defining shroud deflection roller (19) in the entrance area (17).

2. Equipment according to claim 1 characterised by contra-rotating powered centrifugal wheels (4.1 and 4.2) which are components of the feeder (4), for feeding bulk material into the opening (10); whereby the circumferencial speed of the wheels is adjustable.

3. Equipment according to claim 2 characterised by one or more transporting cross-belts to the feeder (4).

4. Equipment according to claim 1 characterised by that the feeder (4) possesses one or more, essentially vertical, worm conveyors.

5. Equipment according to claim 1 characterised by that the conveyor belt (2) is a box belt.

6. Equipment according to claim 1 characterised by that in the upper deflection area (5) the conveyor belt (2) is sealed in the deflection area in the direction of flow by an elastic body and in the transverse direction by a rigid body (15) and that for the change of inclination of the boom (6) a cover (16) overlaps the deflection point of the conveyor belt to form a corresponding glide piece.

7. Equipment according to claim 6 characterised by that the body (15) sits on a partial covering of the return roller (13) for the shrouding (3).

## Revendications

1. Dispositif permettant le chargement et le transport de matières en vrac dans un système mixte de bande transporteuse inclinée (1) composé d'un convoyeur à bande (2) et d'un convoyeur type sandwich (3) actionné dans le même sens dans la bouche d'alimentation avec transbordement des matières en vrac sur un pont transbordeur mobile (6), normalement placé à l'horizontale mais pouvant aussi pivoter dans le plan vertical sur son axe d'appui principal sous un angle aigu ( ) s'ouvrant vers le haut ou vers le bas par rapport à l'horizontale, qui conduit à un dispositif de déchargement de navires (7) disposé sur le quai possédant un système d'alimentation forcée (4) placé à une distance fixe du système mixte de bande transporteuse inclinée (1) pour permettre d'établir un flux de matières à transporter dans une direction tangentielle à celle du convoyeur à bande (2) et un dispositif de compensation de longueur tenant compte de l'allongement ou du raccourcissement du convoyeur à bande (2) en fonction de la position variable du pont transbordeur ainsi que des galets de guidage et d'appui entraînés par le mouvement des bandes transporteuses (2/3)

caractérisé en ce que

le convoyeur type sandwich (3) du système mixte de bande transporteuse inclinée (1) forme un angle d'ouverture aigu (10) avec la bande élévatrice (2) dans la zone d'admission de celle-ci (17),

la bande élévatrice (2) est équipée d'alvéoles de transport

le brin de charge du convoyeur type sandwich (3) se sépare de la bande élévatrice (2) avant d'atteindre la poulie de renvoi supérieure de celle-ci et est reconduit à sa poulie de renvoi inférieure (19) qui définit avec une poulie guide (20) l'angle d'ouverture du système mixte de bande transporteuse inclinée dans la zone d'admission de celle-ci.

**2.** Dispositif selon la revendication 1, caractérisé en ce que des roues centrifuges (4.1 et 4.2) mues en contrarotation, qui font partie intégrante du système d'alimentation (4), permettent l'alimentation des matières à transporter sous l'angle d'ouverture aigu (10), la vitesse de rotation des roues centrifuges (4.1 et 4.2) étant variable.

**3.** Dispositif selon la revendication 2, caractérisé en ce que une ou plusieurs bandes de transport transversales est ou sont accouplée(s) au système d'alimentation forcée (4).

**4.** Dispositif selon la revendication 1, caractérisé en ce que une ou plusieurs fraises hélicoïdales essentiellement disposées verticalement est ou sont accouplée(s) au système d'alimentation forcée (4).

**5.** Dispositif selon la revendication 1, caractérisé en ce que la bande élévatrice (2) est un convoyeur en caisson.

**6.** Dispositif selon la revendication 1, caractérisé en ce que la bande élévatrice (2) est rendue étanche dans son domaine supérieur de déflection par une pièce profilée (15) qui recouvre le bord des augets de la bande élévatrice (2) et est élastique dans le sens de déroulement de la bande et rigide dans le sens transversal à celui-ci, et que pour le changement d'inclinaison du pont transbordeur (6), un carter (16) du brin supérieur de la bande élévatrice (2) menant au pont transbordeur (6) est conçu dans le voisinage de la pièce profilée (15) en tant que pièce complémentaire coulissante à chevauchement.

**7.** Dispositif selon la revendication 6, caractérisé en ce que la pièce profilée (15) est fixée à une pièce formant un carénage partiel de la poulie de renvoi (13) du convoyeur type sandwich (3).

Fig.1

Fig. 2

Fig.3

Fig.4

(Schnitt I-I aus Fig.2)

Fig.5

Fig.6